# EUROPÄISCHE PATENTSCHRIFT

(11) **EP 2 033 538 B1**
(45) Veröffentlichungstag und Bekanntmachung des Hinweises auf die Patenterteilung: **20.04.2011**
(21) Anmeldenummer: 08157431.1
(22) Anmeldetag: 02.06.2008
(51) Int. Cl.: A46B 13/00, A46B 15/00, B60S 3/00

(54) **Reinigungs- oder dergleichen Polierelement für Autowaschanlagen**
Cleaning or similar polishing element for car wash facilities
Elément de polissage, de nettoyage ou analogue pour stations de lavage automatique

(30) Priorität: 06.09.2007 DE 202007012504 U; 10.10.2007 DE 202007014182 U
(43) Veröffentlichungstag der Anmeldung: 11.03.2009
(73) Patentinhaber: Aqua Brush Waschbürsten GmbH, 93437 Furth im Wald (DE)
(72) Erfinder: Franz, Jürgen, 93437 Furth im Wald (DE); Wittmann, Rainer, 93466 Chamerau/Lederdorn (DE)
(74) Vertreter: Tomerius, Isabel

(56) Entgegenhaltungen:
- DE-A1- 19 942 024
- DE-A1-102005 061 612
- DE-U1- 20 104 007
- DE-U1- 20 300 645

## Beschreibung

Vorliegende Erfindung betrifft ein Reinigungs- oder dergleichen Polierelement für Autowaschanlagen, mit wenigstens einem Reinigungsfinger, der außenseitig wenigstens teilweise eine Kaschierung oder dergleichen Schicht aus einem Reinigungs- oder Poliermaterial aufweist und der auf einen Trägerfinger eines Trägerelementes stülpbar und dort über wenigstens ein Befestigungselement am Reinigungsfinger mit einem Befestigungselement am Trägerfinger in lösbaren Arretierungseingriff bringbar ist.

Derartige Reinigungs- oder Polierelemente sind aus dem Stand der Technik bekannt. Sie werden in unterschiedlichen Ausführungen auf Dreh- und Rotationsbürsten, Pinselbürsten oder ähnlichen Einrichtungen zur Reinigung, zum Polieren oder ähnlichem Behandeln von Kraftfahrzeugen und sonstigen Fahrzeugen verwendet.

Ein derartiges Reinigungselement ist aus der DE 10 2005 061 612 bekannt.

In diesem Zusammenhang sei drauf hingewiesen, dass hier unter Reinigungs- oder dergleichen Polierelement alle Elemente verstanden werden, die der Reinigung, dem Polieren, dem Trocknen oder gleichen Oberflächenbehandeln von Gegenständen dienen können. Unter Autowaschanlagen werden hier neben herkömmlichen Waschstraßen oder Waschkabinen auch sämtliche andere Einrichtungen verstanden, die in diesem Bereich zur Reinigung von Kraftfahrzeugen, Eisenbahnen etc. ihre Verwendung finden.

Üblicherweise werden Reinigungseinrichtungen von oben genannten Autowaschanlagen mit verschiedensten Reinigungselementen bestückt, wobei die Befestigung der Reinigungsfinger auf dem Reinigungselement meist über ein Trägerelement erfolgt, auf den oder an dem die entsprechenden Elemente befestigt werden.

Üblicherweise sind an den Trägerelementen Trägerfinger ausgebildet, auf die die als Reinigungsfinger aufgeschoben oder dergleichen befestigt sind. Das durch die Kombination aus Trägerfinger und aufgeschobenem Reinigungsfinger entstandene Reinigungselement wird dann über eine entsprechende Montageleiste beispielsweise an einer Drehachse oder einer entsprechenden Aufnahme einer Reinigungsbürste etc. befestigt.

Nach einer bestimmten Anzahl an Wasch- oder Polierzyklen müssen die auf den Trägerfingern befestigten Reinigungsfinger ausgetauscht und durch neue ersetzt werden. Dieser Austausch bedeutet einen Stillstand des Waschvorgangs und darüber hinaus durch die Anschaffung neuer Reinigungsfinger beim Betrieb einer Autowaschanlage einen hohen Kostenfaktor.

Darüber hinaus hat sich herausgestellt, dass bei der Ausrüstung von Autowaschanlagen mit oben genannten Reinigungsfingern bei starken Verschmutzungen das Waschergebnis bisweilen ungenügend ist.

Zudem hat es sich als problematisch erwiesen, das die Trägerelemente durch die meist feuchten Reinigungsfinger sehr hohen Belastungen unterworfen sind. Nicht selten kommt es schon nach kurzer Zeit zu einem Ausreißen der Montageleisten an den Trägerelementen

Vorliegender Erfindung liegt folglich die Aufgabe zugrunde ein Reinigungs- oder dergleichen Polierelement für Autowaschanlagen derart weiterzubilden, dass ein preiswerterer Betrieb bei gleichzeitig verbesserter Reinigungs-/Polierleistung, Handhabbarkeit und Haltbarkeit gewährleistet ist.

Diese Aufgabe wird durch ein Reinigungs- oder dergleichen Polierelement gemäß Patentanspruch 1 und ein Montagewerkzeug gemäß Patentanspruch 13 gelöst.

Insbesondere wird diese Aufgabe also durch ein Reinigungs- und dergleichen Polierelement für Autowaschanlagen, mit wenigstens einem Reinigungsfinger, der außenseitig wenigstens teilweise eine Kaschierung oder dergleichen Schicht aus einem Reinigungs- oder Poliermaterial aufweist und der auf einen Trägerfinger eines Trägerelementes stülpbar und dort über wenigstens ein Befestigungselement am Reinigungsfinger mit einem Befestigungsgegenelement am Trägerfinger in lösbaren Arretierungseingriff bringbar ist, dadurch gelöst, dass der Reinigungsfinger ein schlauchförmiges Flächenelement mit einer Oberseite, einer Unterseite und zwei Schlauchenden ist, an denen schlauchinnenseitig Masseelemente angeordnet sind, die als Befestigungselemente ausgebildet sind, und wobei der Reinigunsfinger wahlweise von jedem Schlauchende aus auf den Trägerfinger aufstülpbar ist.

Der Reinigungsfinger ist dabei schlauchförmig und insbesondere als ein schlauchförmiges Flächenelement ausgebildet, so dass von seinen freien und insbesondere offenen Schlauchenden der Trägerfinger des Trägerelementes in den Reinigungsfinger eingeführt werden kann. Durch die Anordnung des Masseelementes auf der Innenseite des Schlauches wird die Homogenität der Außenseite gewahrt, so dass es nicht zu Beschädigungen der zu reinigenden oder zu polierenden Oberflächen kommt. Die Ausbildung als Flächenelement, also insbesondere einem Element, bei dem die Oberseite und die Unterseite sehr viel größer sind als die Seitenbereiche, wird zudem ein effektives Reinigungsergebnis erzielt. Natürlich ist es aber auch möglich das Flächenelement mit drei oder mehr geometrisch nahezu gleichen Seiten oder mit einer Mehrzahl unterschiedlich geometrischer Seiten auszubilden, wenn dies erforderlich sein sollte.

Das Masseelement kann aus sämtlichen Materialien bestehen, die zu einer Erhöhung der Masse am freien Ende des Reinigungsfingers dienen. Vorzugsweise ist natürlich darauf zu achten, dass die Materialien feuchtigkeitsresistent und insbesondere widerstandsfähig gegen verwendete Reinigungsmittel und Poliermittel sind. Je nach zu behandelnden Oberflächen kann die Masse dabei variiert werden. Auch ist es in diesem Zusammenhang möglich, das Masseelement so auszubilden, das es bei Bedarf um weitere Massestücke beschwer- oder erleichterbar ist. Hier sind sämtliche aus dem Stand der Technik bekannten Verbindungsmittel und insbesondere Klettverschlüsse verwendbar.

Vorzugsweise ist das Masseelement als Befestigungselement ausgebildet. Auf diese Weise reduzieren sich die Herstellungskosten des Reinigungsfingers, da sowohl zur Befestigung des Reinigungsfingers als auch zur Beschwerung des freien Endes ein einziges Elementes und insbesondere ein als Masseelement ausgebildetes Befestigungselement verwendet werden kann.

Als Befestigungselement können sämtliche aus dem Stand der Technik bekannten Befestigungselemente zur insbesondere lösbaren Anordnung des Reinigungsfingers auf dem Trägerfinger verwendet werden. Hinsichtlich der Widerstandsfähigkeit gegen Feuchtigkeit bieten sich hier insbesondere Klettverschlüsse an, die eine einfache und schnelle Befestigung sowie ein unproblematisches Lösen des Reinigungsfingers vom Trägerfinger gewährleisten.

Diese Ausführung gewinnt besondere Bedeutung bei der Anordnung von Masseelementen an beiden Schlauchenden des Reinigungsfingers, wobei dieser wahlweise von jeder Schlauchseite auf den Trägerfinger aufstülpbar ist. Je nach Aufstülprichtung des Reinigungsfingers wird so also das als Befestigungselement ausgebildete Masseelement entweder zur Beschwerung des freien Endes oder zur Befestigung des "Montageendes" am Trägerfinger verwendet.

Positiver Nebeneffekt dabei ist, dass der Reinigungsfinger zweiseitig verwendbar wird. Naturgemäß nutzen sich beim Reinigen oder Polieren die freien und insbesondere beschwerten Ende des Reinigungsfingers stärker ab als die Enden, die am Trägerfinger bzw. Trägerelement angeordnet sind. Sobald eine bestimmte Anzahl an Reinigungszyklen durchlaufen wurde, kann der Reinigungsfinger vom Trägerfinger gelöst und nun mit seinem ehemals freien Ende, wieder auf den Trägerfinger aufgeschoben werden. Durch diese zweiseitige Verwendbarkeit des Reinigungsfingers lässt sich so die Lebensdauer eines Reinigungsfingers nahezu verdoppeln.

Vorzugsweise ist die außenseitig auf dem Reinigungsfinger ausgebildete Kaschierung im Wesentlichen gleichmäßig auf der Oberseite und der Unterseite ausgebildet. Bei normalem Betrieb dient beispielsweise die Unterseite des Reinigungsfingers als Hauptreinigungsfläche, während die Oberseite nur geringfügigen Kontakt zum zu reinigenden Objekt hat. Durch die gleichmäßige Kaschierung wird aber auch bei einem solchen Kontakt ebenfalls eine Reinigung erzielt und darüber hinaus eine Beschädigung der zu polierenden oder zu reinigenden Oberflächen verhindert.

Vorzugsweise ist der als Schlauchelement ausgebildete Reinigungsfinger wahlweise unter Vertauschung der Ober- und Unterseite auf dem Trägerfinger aufstülpbar. Das bedeutet, dass der Reinigungsfinger nach durchlaufen einer gewissen Anzahl an Reinigungszyklen und dem damit einhergehenden Verschleiß der Hauptreinigungsfläche, beispielsweise der Unterseite des Reinigungsfingers, vom Trägerfinger abgezogen und unter Vertauschen der Ober- und Unterseite wieder so auf den Trägerfinger aufstülpbar ist, dass nun die noch nicht verbrauchte, ehemalige Oberseite die Hauptreinigungsfläche bildet. Auch durch diese Ausführungsform lässt sich die Anzahl an Reinigungszyklen pro Reinigungsfinger nahezu verdoppeln.

Im Zusammenhang mit dem von beiden Schlauchseiten auf den Trägerfinger aufschiebbaren Reinigungsfinger ergibt sich ein Reinigungselement, das im Vergleich zum Stand der Technik eine nahezu vierfache Anzahl an Reinigungszyklen durchlaufen kann, bevor dessen Reinigungsfinger durch einen neuen Reinigungsfinger ausgetauscht werden muss. Natürlich ist es in diesem Zusammenhang auch möglich den Reinigungsfinger so auszubilden, das jede der vier verwendbaren Seiten einem anderen Reinigungszweck dient, so dass beispielsweise in Serie ein Multifunktions-Reinigungsfinger gefertigt werden kann, der in einer Autowaschanlage unterschiedlich Funktionen erfüllt. Hier erhöht sich dann natürlich nicht die Haltbarkeit, es werden jedoch trotzdem die Betriebskosten gesenkt, da der Herstellungspreis und die Lagerhaltungskosten sinken.

Vorzugsweise ist wenigstens ein Masseelement schlauchinnenseitig auf der im aufgestülpten Zustand der Oberseite und/oder der Unterseite des Trägerfingers zugewandten Innenseite des schlauchförmigen Reinigungsfingers angeordnet. Insbesondere bei der Ausbildung des Masseelementes als Befestigungselement lässt sich so der Reinigungsfinger sicher auf dem Trägerfinger positionieren, wobei natürlich auch hier auf beiden Seiten des Trägerfingers entsprechende Befestigungsgegenelemente angeordnet sein sollten. Aber auch wenn dies nicht der Fall ist, ermöglicht die beidseitige Anordnung des Masseelementes bzw. des als Masseelement ausgebildeten Befestigungselementes das Vertauschen der Ober- und Unterseite bzw. das Vertauschen der Stülprichtung des Reinigungsfingers, um diesen, je nach Abnutzungsgrad der Kaschierung, verschiednartig auf den Trägerfinger aufzustülpen.

Vorzugsweise weist der Reinigungsfinger an wenigstens einem Schlauchende Reinigungsstreifen oder dergleichen Polierelemente auf, die sich flexibel im Wesentlichen in Richtung der Längsachse des Reinigungsfingers erstrecken. Diese im Wesentlichen als Pinselelemente fungierenden Streifen oder Elemente sind insbesondere bei Trocknungs- oder Poliervorgängen besonders vorteilhaft. Durch die streifenförmige und insbesondere flexible Ausbildung ist es auch bei einem Reinigungsfinger mit an beiden Schlauchenden ausgebildeten Reinigungsstreifen etc. möglich, den Reinigungsfinger von beiden Schlauchseiten aus auf den Trägerfinger aufzustülpen. Dabei sind vorzugsweise die Reinigungsstreifen radial über das Schlauchelement verteilt, so dass auch bei einem Vertauschen der Ober- und Unterseite des Reinigungsfingers während des Betriebes die Reinigungsstreifen ihre volle Wirkung entfalten können. Bei der Herstellung eines solchen Reinigungsfingers besteht dieser beispielsweise aus einem Filzmaterial, wobei nach dem Ausbilden eines Filzschlauches die Schlauchenden derart eingeschnitten werden, dass sich an daraus resultierenden neuen Schlauchenden die flexiblen einzelnen Reinigungsstreifen bilden.

Die Kaschierung des Reinigungsfingers oder, je nach verwendetem Material, der Reinigungsfinger selber, bestehen vorzugsweise aus einem textilen Filz oder aus anderen Arten von Vlies- und Gewebestoffen sowie PU- oder PE-Materialien, die sich entweder schlauchartig fertigen oder zu einem Schlauch zusammenkleben, nähen oder sonst wie verbinden lassen. Insbesondere ist der Reinigungsfinger aus einem synthetischen Lammfell hergestellt. Das Trägermaterial besteht vorzugsweise aus PU-Schaum mit einer Stärke von 8 mm, wobei im besonderen ein geschlossenzelliger, vernetzter Polyolephinschaumstoff verwendet wird. Dieser Schaum gewährleistet eine hohe Widerstandsfähigkeit gegen Feuchtigkeit, Reinigungs- und Poliermittel, ist ausreichend tragfest und elastisch und erlaubt darüber hinaus die sehr einfache und kostengünstige Herstellung. Zudem verhindert dieses Trägermaterial eine Beschädigung der zu reinigenden oder zu polierenden Oberflächen, sollte der Trägerfinger oder das Trägerelement mit diesen in Kontakt kommen.

Vorzugsweise ist das Masseelement ein Masseband und schlauchinnenseitig co-radial am Reinigungsfinger angeordnet. Eine solche Ausführung erleichtert die Befestigung des Masseelementes, da dieses parallel zur schlauchinnenseitigen Oberfläche des Reinigungsfingers einfach aufgeklebt oder aufgenäht werden kann.

Vorzugsweise besteht der Reinigungsfinger aus einem, insbesondere über eine in Längsrichtung in seinem Seitenbereich laufende Naht schlauchförmig verbundenen Textil oder dergleichen flexiblen Trägerstoff. Dabei ist darauf zu achten, dass der Trägerstoff derart ausgebildet ist, dass er bei aufgestülpten Reinigungsfinger auch bei Einwirken von Feuchtigkeit, Polier- oder Reinigungsmittel derart formstabil bleibt, dass der Reinigungsfinger eine optimale Reinigungs- oder Polierwirkung erzielt. Die Herstellung eines solchen Reinigungsfingers ist sehr kostengünstig, da beispielsweise ein rechteckiger einseitig kaschierter Trägerstoff mit seinen gegenüberliegenden zwei Seitenbereichen unter Bildung des Schlauchelementes zusammengenäht werden kann. Dadurch, dass die Verbindungsstelle der beiden Seitenbereiche im Seitenbereich des Reinigungsfingers liegt, erhält man so im Wesentlichen plane Ober- und Unterseiten, die jeweils eine identische Reinigungswirkung haben, so dass der Reinigungsfinger beliebig auf den Trägerfinger aufgestülpt werden kann.

Vor dem Verbinden der beiden gegenüberliegenden Seitenbereiche kann zudem das Masseelement auf der unkaschierten Seite befestigt werden und zwar derart, dass es nach dem Verbinden der Seitenbereiche und der dadurch entstehenden Schlauchform sowohl auf der im aufgestülpten Zustand der Oberseite und der Unterseite des Trägerfingers zugewandten Innenseite des schlauchförmigen Reinigungsfingers angeordnet ist.

Natürlich ist es aber auch möglich einen beidseitig kaschierten Trägerstoff zu verwenden, wobei dann die Kaschierung derart ausgebildet ist, dass sie als Befestigungselement fungiert und mit einem komplementär ausgebildeten Befestigungsgegenelement am Trägerfinger in Arretierungseingriff bringbar ist. Hier ist also beispielsweise die Ausbildung der Kaschierung als Flauschband und die Ausbildung des Befestigungsgegenelementes als Hakenband vorstellbar, das dann in die Kaschierung eingreift.

Vorzugsweise ragt der Trägerfinger bei aufgestülptem Reinigungsfinger im Wesentlichen 30 - 60 %, insbesondere 50 % unter Bildung eines Flexbereichs zwischen freiem Ende des Trägerfingers und Massebereich, in den Reinigungsfinger ein. Diese Ausbildung garantiert die Formstabilität des Reinigungsfingers im aufgestülpten Zustand und verbessert darüber hinaus die Reinigungswirkung, da das durch den Flexbereich elastische freie Ende des Reinigungsfingers eine optimale Reinigungswirkung erzielt. Vorzugsweise wird in diesem Zusammenhang der Massebereich möglichst schmal gewählt, so dass der Flexbereich sich im Wesentlichen über 25 - 65 %, und insbesondere 45 % des Reinigungsfingers erstreckt. In diesem Zusammenhang ist es auch möglich das Befestigungsgegenelement auf dem Trägerfinger als in Längsachse des Trägerfingers lang gestrecktes Befestigungsgegenelement auszubilden, da dann der Reinigungsfinger je nach Bedarf an unterschiedlichen Positionen auf dem Trägerfinger befestigt werden kann. In sofern kann also eine gezielte Einstellung des Flexbereiches erfolgen. Diese Ausführung gilt natürlich auch für den Reinigungsfinger, der seinerseits mit einem in Längsachse langgestreckten Befestigungselement ausgebildet werden kann.

Um u. a. die Kontur einer Waschbürste, also deren Außenumfang über die Längsachse zu verändern, können die Trägerfinger unterschiedlich lang ausgebildet werden. Befestigungsfinger, die dann auf diese unterschiedlich langen Trägerfinger aufgestülpt werden können so alle gleich ausgeführt werden, was die Produktionskosten senkt. Auf diese Weise kann also gezielt auf die Außenkontur einer Waschbürste oder einer ähnlichen Reinigungseinrichtung Einfluss genommen werden. Natürlich ist es aber auch möglich die Reinigungsfinger in unterschiedlichen, eventuell gestaffelten Längen auszuführen, um so einem Benutzer der Autowaschanlage oder dergleichen Reinigungsanlage über die Wahl der Finger die Gestaltung der Bürstenkontur etc. zu ermöglichen. In diesem Zusammenhang ist es auch möglich auf dem Trägerfinger entsprechende Aufnahmen für Versteifungselemente vorzusehen, die beispielsweise mittels Klettverschluss auf dem Trägerfinger aufgebracht werden und so eine Einflussnahme auf die Steifigkeit des Trägerelementes erlauben. Auch dies ist natürlich auch auf den Reinigungsfinger übertragbar, in den beispielsweise Versteifungselemente eingeschoben und dort befestigt werden können.

Vorzugsweise weist das Trägerelement eine Montageleiste auf, die über ein Montageelement an einem Montagegegenelement an einer Bürstenachse oder dergleichen Vorrichtung anordbar ist, wobei sich die Montageleiste mit einer Grundleiste entlang einer Seitenkante des Trägerelementes erstreckt und wenigstens einen Stützfortsatz umfasst, der sich im Wesentlichen senkrecht dazu und parallel zur Ebene des Trägerelementes erstreckt.

In diesem Zusammenhang sei darauf hingewiesen, dass eine solche Ausbildung des Trägerelementes mit Montageleiste sowohl für ein Reinigungselement der zuvor genannten Art als auch für aus dem Stand der Technik bekannte und insbesondere im Oberbegriff von Patentanspruch 1 genannte Reinigungselemente Vorteile bietet.
Insbesondere bei der Anordnung des Reinigungselementes an rotierenden Bürsten wirken auf die Trägerelemente sehr hohe Kräfte. Durch die Ausbildung eines Stützfortsatzes, der im Wesentlichen senkrecht zur Grundleiste des Montageelementes verläuft, werden diese Kräfte verteilt vom Trägerelement in die Montageleiste übertragen, so dass es nicht zu einem Ausreißen der Befestigungspunkte des Trägerelementes an der Montageleiste kommt. Schon hier wird klar, dass also auch bei einem Reinigungselement ohne gesondert beschwerter freien Enden der Reinigungsfinger ein solches Trägerelement besondere Vorteile bietet.

Vorzugsweise bilden die Grundleiste und der Stützfortsatz ein L-Profil, das sich entlang wenigstens zwei Seitenkanten des Trägerelementes erstreckt. Auf diese Weise sind die beiden Seitenkanten des Trägerelementes durch das L-Profil gefasst, was zum einen die Stabilität des Trägerelementes verbessert, zum anderen eine optimale Krafteinleitung garantiert.

Vorzugsweise umfasst die Montageleiste und insbesondere das L-Profil eine Montagenut, in die das Trägerelement mit wenigstens einer Seitenkante wenigstens teilweise einschiebbar und insbesondere darin befestigbar ist. Die Montagenut ist dabei vorzugsweise komplementär zum Trägerelement und insbesondere zu dessen Dicke ausgebildet, so dass das Trägerelement im Wesentlichen passgenau in die Montagenut einführbar ist. Bei derart ausgebildeten Montageleisten kann dann beispielsweise das Trägerelement durch die U-Schenkel der Montageleiste vernäht werden. Ein Ausreißen der Trägerelemente aus der Montageleiste wird so sicher verhindert, da neben der Fixierungsnaht zwischen Trägerelement und Montageleiste auch die Reibkräfte zwischen Montagenut und Oberseite des Trägerelementes den Sitz des Elementes in der Montageleiste verbessern. Natürlich ist es aber auch möglich das Trägerelement in die Montagenut einzukleben. Neben einer Montagenut können natürlich auch mehrere parallele Montagenuten ausgebildet sein, in die beispielsweise ein mehrschichtiges Trägerelement unter Eingriff einer jeden Trägerschicht in eine jeweils komplementäre Montagenut befestigt wird. Auch ist es möglich innerhalb der Nut entsprechende Rast- oder dergleichen Fortsätze auszubilden, die in die Oberseite des Trägerelementes eingreifen und so dessen Sitz zusätzlich verbessern. Für sich alleine oder im Zusammenspiel mit einer Naht oder einer Klebeverbindung wird so eine sichere Verbindung des Trägerelementes an der Montageleiste gewährleistet.

Insbesondere bei der Anordnung des Reinigungselementes an einer vertikal verlaufenden rotierenden Waschbürste ist dabei vorzugsweise das L-Profil so angeordnet, dass die Grundleiste achsenparallel zur rotierenden Bürste und der L-Schenkel an der unteren Seitenkante des Trägerelementes anliegt und diese stützt.

Vorzugsweise weisen die Grundleiste und/oder der Stützfortsatz Sollbruchstellen oder dergleichen Einrichtungen auf, mittels derer deren Länge, insbesondere schrittweise adaptierbar ist. Somit kann die Montageleiste unproblematisch an sämtliche Größen des Trägerelementes angepasst werden. Als Sollbruchstellen oder dergleichen Einrichtungen sind sämtliche aus dem Stand der Technik bekannten Vorrichtungen verwendbar, die ein einfaches Ablängen der Grundleiste bzw. des Stützfortsatzes erlauben. In diesem Zusammenhang ist natürlich auch die Ausbildung von Markierungen mit umfasst, die das präzise Ablängen mittels einer Säge oder eines dergleichen Werkzeuges erleichtern.

Natürlich ist es auch möglich nicht nur einen Stützfortsatz sondern mehrere Stützfortsätze auszubilden und so beispielsweise das L-Profil mit einem zusätzlichen Klammer-Stützfortsatz zu versehen, der das in das L-Profil eingesetzte Trägerelement von beiden Seiten umgreift und insbesondere beidseitig am Trägerelement befestigt ist.

Vorliegende Erfindung betrifft neben dem Reinigungselement auch ein entsprechendes Montagewerkzeug zum Zusammenbau des Reinigungselementes und insbesondere zum Aufstülpen des Reinigungsfingers auf den Trägerfinger des Trägerelementes.

Dieses Montagewerkzeug umfasst einen insbesondere elastischen Steckfortsatz, der eine zum Reinigungsfinger derart komplementäre Form aufweist, dass er vor dem Aufstülpen des Reinigungsfingers auf dem Trägerfinger, unter Abdeckung der komplementären Befestigungselemente bzw. Befestigungsgegenelemente in den Reinigungsfinger einführbar, zusammen mit diesem auf den Trägerfinger aufstülpbar und nach dem Aufstülpen entfernbar ist, so dass dann die jeweils komplementären Befestigungselemente und Befestigungsgegenelemente miteinander in Arretierungseingriff treten.

Das Montagewerkzeug besteht dabei vorzugsweise aus einem möglichst glatten Oberflächenmaterial, so dass das Eingleiten des Trägerfingers in den Reinigungsfinger unter Zwischenlage des Montagewerkzeuges begünstigt wird.

Bei dem Montagewerkzeug ist es zudem möglich entsprechende Markierungselemente anzubringen, um den korrekten Sitz des Reinigungsfingers auf dem Trägerelement zu signalisieren und insbesondere zu signalisieren, wie weit der Trägerfinger in den Reinigungsfinger einragt. Auf diese Weise kann bei entsprechender Ausbildung der Befestigungselemente bzw. Befestigungsgegenelemente Einfluss auf den Flexbereich und so auf die Steifigkeit des Reinigungsfingers genommen werden.

Bei einer beidseitigen Anordnung der Befestigungselemente, also schlauchinnenseitig auf der der Oberseite und der Unterseite zugewandten Seite im Reinigungsfinger, werden vorzugsweise zwei Montagewerkzeuge verwendet, die in den Reinigungsfinger einschiebbar sind und zwischen die dann der Trägerfinger eingleitet. Natürlich ist es in diesem Zusammenhang auch möglich die beiden Montagewerkzeuge so miteinander zu verbinden, dass sie auf dem Trägerfinger führbar sind.

Auch in diesem Zusammenhang sei angemerkt, dass das hier beschriebene Montagewerkzeug sowohl für ein Befestigungselement gemäß der zuvor genannten Art aber auch für ein Befestigungselement gemäß dem Oberbegriff von Patentanspruch 1 anwendbar ist.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1:: eine schematische Darstellung einer ersten Ausführungsform des Reinigungselementes und einer zugeordneten Waschbürstendrehachse;
- Fig. 2: eines Ausführungsformen eines Reinigungsfingers des Reinigungselementes aus Fig. 1;
- Fig. 3 u. 4: zwei weitere Ausführungsformen eines Reinigungsfingers;
- Fig. 5: einer isometrische Darstellung einer Montageleiste des Reinigungselementes aus Fig. 1;
- Fig. 6: eine Draufsicht auf die Montageleiste aus Fig. 5;
- Fig. 7 - 9: Querschnitte der Montageleiste aus Fig. 5; und
- Fig. 10: eine Darstellung des Reinigungselementes aus Fig. 1 mit eingesetztem Montagewerkzeug.

Im folgenden werden für gleiche und gleich wirkende Bauteile die selben Bezugszeichen verwendet, wobei zur Unterscheidung gleicher Bauteile bisweilen Hochindizes ihre Verwendung finden.

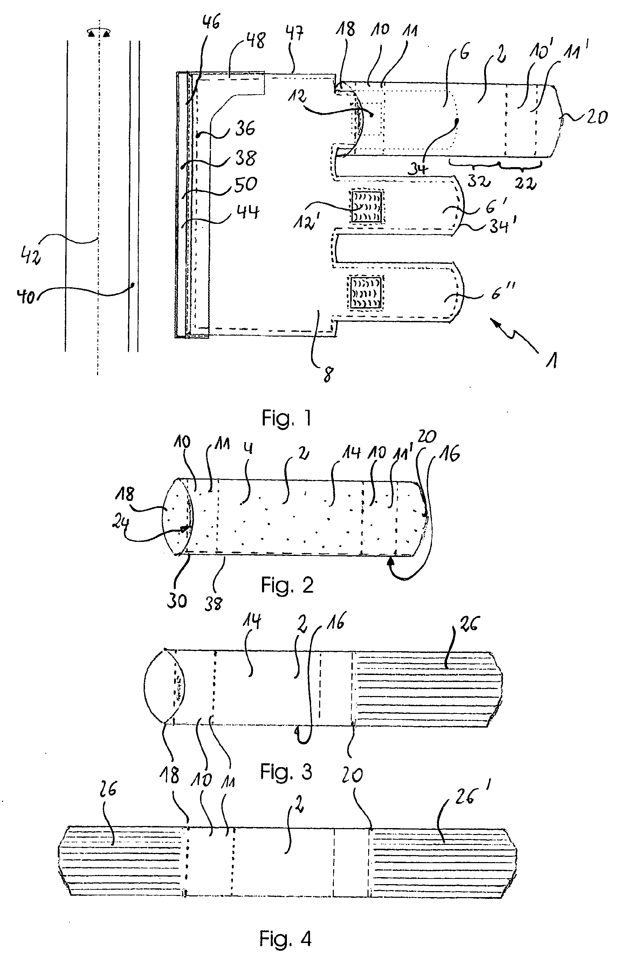

Fig. 1 zeigt eine schematische Darstellung einer ersten Ausführungsform des erfindungsgemäßen Reinigungselementes 1 kurz vor der Befestigung an einer Drehachse 42 einer Reinigungseinrichtung einer Autowaschanlage.

Das Reinigungselement 1 umfasst ein Trägerelement 8, das bei dieser Ausführungsform drei Trägerfinger 6 aufweist, auf die jeweils ein Reinigungsfinger 2 aufgestülpt werden kann. In Fig. 1 ist auf dem Trägerelement 8 nur ein Reinigungsfinger 2 befestigt.

Um das Trägerelement 8 mit dem befestigten Reinigungsfingern 2 an der Drehachse 42 zu befestigen, weist das Trägerelement 8 an einer Seitenkante 46 eine L-förmige Montageleiste 36 auf, die über ein Montagelement 38 an einem komplementären Montagegegenelement 40 der Drehachse 42 befestigbar ist. Das Montagegegenelement 40 kann dabei beispielsweise eine Kederschiene bzw. ein so genannter C-Channel sein, in den das Montageelement 38 im Wesentlichen passgenau und arretierend eingeschoben werden kann.

Die als L-Profil 50 ausgebildete Montageleiste 36 umfasst eine Grundleiste 44, die parallel zur Seitenkante 46 des Trägerelementes 8 verläuft. Senkrecht dazu zweigt von dieser Grundleiste 44 ein Stützfortsatz 48 ab, der eine weitere Seitenkante 47 des Trägerelementes 8 umschließt.

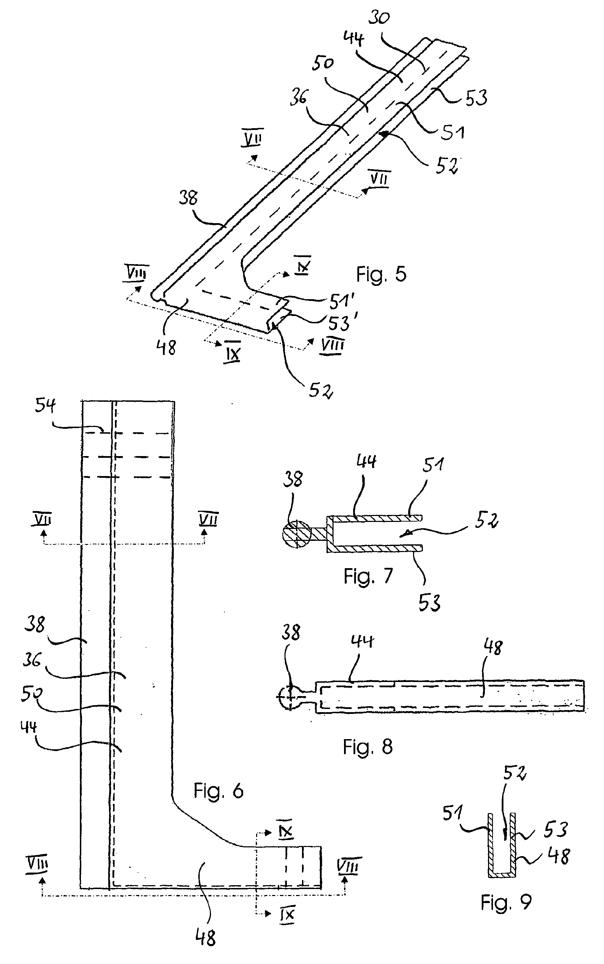

Auf die genauere Ausführungsform der Montageleiste 36 wird im Folgenden noch unter Verweis auf die Fig. 5 bis 9 Bezug genommen.

Das Trägerelement 8 ist hier aus einem geschlossenzellig vernetzten Polyolephinschaumstoff hergestellt, wobei die Trägerfinger 6 integral mit dem Trägerelement 8 ausgebildet sind. Ein jeder Trägerfinger 6 ist so ausgebildet, dass der als Schlauchelement ausgebildete Reinigungsfinger 2 auf die Trägerfinger 6 aufgeschoben werden kann. Verschiedene Ausführungsformen dieser Reinigungsfinger 2 sind in den Fig. 2 bis 4 schematisch dargestellt.

Der in Fig. 2 dargestellte Reinigungsfinger 2 besteht aus einem mit einer Kaschierung 4 versehenen textilen Trägermaterial, das zu einem Schlauch gebogen und am entstehenden Seitenbereich 38 durch eine Naht 30 fixiert ist. Dadurch entsteht ein Reinigungsfinger 2 mit einer Oberseite 14 und (zur Darstellungsebene abgewandten) Unterseite 16, die bei dieser Ausführungsform jeweils gleichmäßig mit der Kaschierung 4 versehen sind.

Je nach Stülprichtung kann dieser Reinigungsfinger 2 über Schlauchenden 18 bzw. 20 auf einen Trägerfinger 6 (siehe Fig. 1) aufgestülpt werden. Folglich ergibt sich dadurch ein Reinigungsfinger 2, bei dem nicht nur die Oberseite 14 und die Unterseite 16 vertauscht werden kann, sondern der auch wahlweise vom Schlauchende 18 aus oder vom Schlauchende 20 aus auf den Trägerfinger 6 aufgeschoben werden kann. Auf diese Weise kann der Reinigungsfinger 2, beispielsweise nach einer Abnutzung im Bereich der Oberseite 14 des Schlauchendes 20 vom Trägerfinger 6 abgezogen und "verkehrt herum" also mit dem Schlauchende 20 voraus wieder auf den Trägerfinger 6 aufgeschoben werden. Sobald nach diesem Wechselvorgang auch die Oberseite 14 des jetzt freien Schlauchendes 18 abgenutzt ist, kann der Reinigungsfinger 2 erneut abgezogen und unter Vertauschung der Oberseite 14 mit der Unterseite 16 erneut verwendet werden. Erst nach einem vierseitigem Wechsel und nach der vollständiger Abnutzung des Reinigungsfingers 2 ist es nötig, einen neuen Reinigungsfinger 2 auf den Trägerfinger 6 aufzuschieben.

Im Bereich der Schlauchenden 18 und 20 sind auf der Innenseite 24 als Befestigungselemente 10 ausgebildete Masseelemente 11 angeordnet. Diese Masseelemente 11 dienen, je nach Positionierung des Reinigungsfingers 2 entweder als Befestigungselemente zum Fixieren des Reinigungsfingers 2 auf dem Trägerfinger 6 oder zur Bildung eines Massebereiches 22 und dadurch zur Verbesserung des Reinigungsvorganges.

Wie in Fig. 1 dargestellt, dient das als Befestigungselement 10 ausgebildete Masseelement 11 hier der Befestigung des Reinigungsfingers 2 auf dem Trägerfinger 6, indem es mit einem komplementär ausgebildeten Befestigungsgegenelement 12 in Arretierungseingriff bringbar ist.

Die beiden komplementären Befestigungselemente 10 bzw. -Gegenelemente 12 sind bei dieser Ausführungsform als Klettverschlusselemente ausgebildet, wobei das als Flauschband ausgebildete Befestigungselement 10 schlauchinnenseitig bandförmig am Reinigungsfinger 2 angenäht ist. Das komplementäre als Hakenband ausgebildete Befestigungsgegenelement 12 ist auf beiden Seiten des Trägerfingers 6 angenäht. Natürlich können hier auch andere Befestigungselemente oder Verfahren zum Anordnen derselben am Reinigungsfinger 2 bzw. Trägerfinger 6 verwendet werden.

Am im aufgestülpten Zustand freien Schlauchende 20 des Reinigungsfingers 2 dient das als Masseelement 11' ausgebildete Befestigungselement 10' der Bildung des Massebereiches 22, der eine Verbesserung der Reinigungswirkung zur Folge hat. Durch das Beschweren des freien Schlauchendes 20 drückt sich der resultierende Massebereich 22 des Reinigungsfingers 2 verstärkt auf eine zu reinigende oder polierende Oberfläche (nicht dargestellt) auf, was das Reinigungs- bzw. Polierergebnis deutlich verbessert.

Der Trägerfinger 6 ragt dabei hier im Wesentlichen 50 % in den Reinigungsfinger 2 ein, wobei sich dadurch zwischen einem freien Ende 34 des Trägerfingers 6 und dem Massebereich 22 ein Flexbereich 32 bildet, der das elastische Verhalten des Reinigungsfingers 6 während des Reinigungsvorganges etc. sicherstellt. Dieser Flexbereich 22 erstreckt sich hier im Wesentlichen über 40 % des Reinigungsfingers 2. Natürlich sind je nach Reinigungswirkung, verwendeter Kaschierung 4, zu reinigender, polierender oder sonst wie zu behandelnder Oberfläche andere Verhältnisse zwischen Flexbereich 32, Massebereich 22 und der Länge des einragenden Trägerfingers 6 wählbar.

Anstelle des hier verwendeten bandförmigen Befestigungselementes 10 kann natürlich auch die Kaschierung 4 so um die Schlauchenden 18, 20 zur Schlauchinnenseite hin herumgezogen werden, dass diese dann als Masseelement 11 bzw. Befestigungselement 10 fungiert und mit dem komplementären Befestigungsgegenelement 12 am Trägerfinger 6 in Arretierungseingriff bringbar ist. Anstelle einer Kaschierung 4 kann natürlich auch der gesamte Reinigungsfinger 2 aus einem Material, beispielsweise einem PU-Schaum oder einem Filz bestehen, ohne dass eigens eine Kaschierung aufgebracht werden muss.

Wie bereits erwähnt ist es möglich an Stelle der in Figur 1 gezeigten gleichlangen Trägerfinger 6 auch unterschiedlich lange Trägerfinger anzuordnen, auf die dann die jeweiligen identisch ausgebildeten Reinigungsfinger 2 aufgestülpt werden. Durch die unterschiedlichen Längen der Trägerfinger 6 ergibt sich so eine veränderte Außenkontur des Reinigungselements 1, sodass bei einer linearen Anordnung mehrerer Reinigungselemente die Außenkontur einer Waschbürste oder einer ähnlichen oder dergleichen Reinigungsvorrichtung individuell angepasst werden kann.

Die Fig. 3 und 4 zeigen zwei weitere Ausführungsformen des Reinigungsfingers 2, wobei an den jeweiligen Schlauchenden 18, 20 Reinigungsstreifen 26 angeordnet sind, die sich hier als elastische "Pinsel" parallel zur Ebene des Reinigungsfingers 2 erstrecken. Diese Reinigungsstreifen 26 sind dabei so angeordnet, dass trotzdem der jeweilige Trägerfinger 6 über die Schlauchenden 18 bzw. 20 in den Reinigungsfinger 2 eingeführt und insbesondere die Befestigungselemente 10 mit Befestigungsgegenelementen 12 am Trägerfinger 6 (siehe Fig. 1) in Arretierungseingriff bringbar sind.

Auch die hier gezeigten Ausführungsformen des Reinigungsfingers 2 sind vierseitig verwendbar, also unter Austausch der Oberseite 14 und der Unterseite 16 bzw. der als freie Enden auf dem Trägerfinger 6 angeordneten Schlauchenden 18 bzw. 20. Natürlich ist es insbesondere bei einer Ausführung des Reinigungsfingers 2 gemäß Fig. 4 möglich, den Zugang für den Trägerfinger 6 im mittleren Bereich des Reinigungsfingers 2 in Form eines Schlitzes (nicht dargestellt) auszuführen, so dass der Trägerfinger 6 auch dort in den Reinigungsfinger 2 eingeführt werden kann. Entsprechend kann dann auch im mittleren Bereich schlauchinnenseitig ein Befestigungselement vorgesehen werden.

Wie bereits erwähnt zeigen die Fig. 5 bis 9 eine detaillierte Ausführungsform der Montageleiste 36 zur Befestigung des Trägerelementes 8 an einer Reinigungs- oder Poliereinrichtung, beispielsweise einer Drehachse 42 (siehe Fig. 1). Wie ebenfalls bereits erwähnt kann eine solche Montageleiste 36 nicht nur bei Reinigungselementen mit durch Masseelemente beschwerten freien Enden, sondern bei sämtlichen Trägerelementen verwendet werden, die der Aufnahme von Reinigungselementen und insbesondere -Fingern dienen.

Die Montageleite 36 ist hier ein L-Profil 50 ausgeführt, das sowohl an der Grundleiste 44 als auch am Stützfortsatz 48 eine U-Profilaufnahme bzw. Montagenut 52 umfasst, in die das Trägerelement 8 (siehe Fig. 1) im Wesentlichen passgenau eingesetzt werden kann. Die Befestigung des Trägerelementes 8 erfolgt dann vorzugsweise über eine Naht 30, die durch die jeweiligen Schenkel 51, 53 unter Durchdringen des Trägerelementes 8 (siehe Fig. 1) und dessen jeweiligen Seitenkante 46, 47 gesetzt wird. Daraus resultiert ein sehr sicherer und hoch belastbarer Sitz des Trägerelementes 8 in der Montageleiste 36, wobei Kräfte nicht nur durch die Naht 30 sondern auch durch die zwischen den Schenkeln 51, 53 und dem Trägerelement 8 resultierenden Reibungskräfte aufgenommen werden.

Insbesondere in den Fig. 7 und 8 ist weiter das Montagelement 38 der Montageleiste 36 dargestellt, das hier in Form einer Zylinderschiene in eine an der Drehachse 42 (siehe Fig. 1) ausgebildeten Kederschiene als Montagegegenelement 40 eingeschoben werden kann.

Natürlich ist es auch möglich an den Schenkeln 51, 53 innenseitig der Montagenut 52 entsprechende Rastfortsätze auszubilden, die insbesondere bei einer elastischen Ausführung des Trägerelementes 8 arretierend in dieses eingreifen und es zusätzlich in seinem Sitz arretieren.

In Fig. 6 sind zudem Sollbruchstellen 54 dargestellt, die beispielsweise in Form von Einkerbungen an der Montageleiste 36 angeordnet sein können und so auf einfache Weise die Längenadaption der Montageleiste 36 an unterschiedliche Trägerelemente 8 (siehe Fig. 1) erlauben. Natürlich ist es stattdessen auch möglich lediglich Markierungen vorzusehen, die dann das Ablängen mittels einer Säge etc. möglich machen.

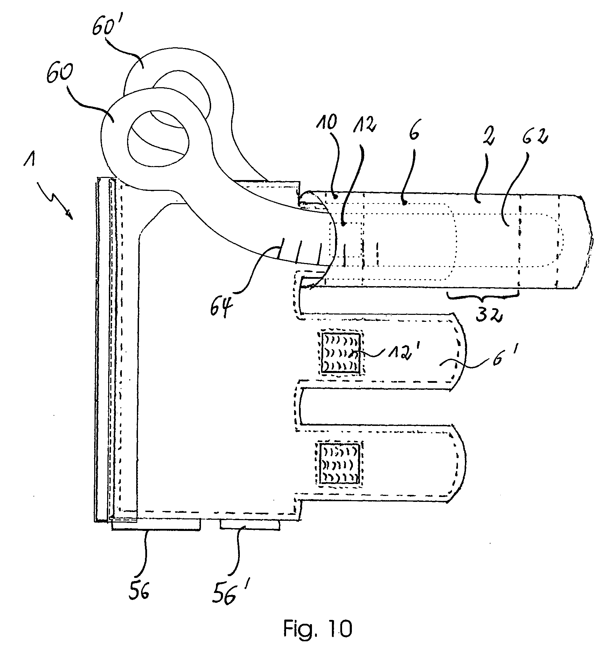

Anstelle von Sollbruchstellen ist es natürlich auch möglich entsprechende Verbindungselemente vorzusehen, um beispielsweise die Montageleiste 36 bei Bedarf zu verlängern. In diesem Zusammenhang ist es auch denkbar entsprechende Verbindungselemente vorzusehen, die das Zusammenschalten mehrerer Reinigungselemente 1 untereinander zu Reinigungsverbänden erlauben und so ein zusätzliche Fixierung der einzelnen Reinigungselemente 1 an einer Drehachse 42 etc. ermöglichen. Solche Verbindungselemente 56 können natürlich auch an den Trägerelementen und insbesondere an deren Seitenbereichen 47 vorgesehen sein (siehe Fig. 10). Hier sind entsprechende Schienen aber auch andere Verbindungselemente anwendbar. Das Verbindungselement kann so beispielsweise ein Klettverschlusselement 56 sein, das mit einem komplementären Klettverschlussgegenelement (nicht dargestellt) an einem weiteren Reinigungselement angeordnet ist und so das Verbinden dieser beiden Reinigungselemente erlaubt.

Fig. 10 zeigt schließlich ein Befestigungselement 1, wie es bereits in Fig. 1 dargestellt wurde mit zwei eingesetzten Montagewerkzeugen 60, die das Aufstülpen der Reinigungsfinger 2 auf die Trägerfinger 6 erleichtern.

Die Montagewerkzeuge 60 weisen dazu je einen Steckfortsatz 62 auf, der derart ausgebildet ist, dass er in den Trägerfinger 6 einführbar ist und unter Abdeckung der komplementären Befestigungselemente 10 bzw. Befestigungsgegenelemente 12 das Überstülpen des Reinigungsfingers 2 über den Trägerfinger 6 erlaubt, ohne dass die Befestigungselemente 10 bzw. Befestigungsgegenelemente 12 miteinander in Arretierungseingriff treten. Sobald der Reinigungsfinger richtig auf dem Trägerfinger 6 angeordnet ist, können die Montagewerkzeuge 60 herausgezogen werden, wobei dann die Befestigungselemente 10 mit den Befestigungsgegenelementen 12 in Arretierungseingriff treten und den Reinigungsfinger 2 sicher auf dem Trägerfinger 6 arretieren.

In diesem Zusammenhang ist es möglich an den Montagewerkzeugen 60 entsprechende Markierungen 64 vorzusehen, die den richtigen Sitz des Reinigungsfingers 2 auf dem Trägerfinger 6 signalisieren. Auch ist es möglich Markierungen vorzusehen, die einen Rückschluss darauf geben, wie weit der Trägerfinger 6 in den Reinigungsfinger 2 einragt um so beispielsweise gezielt den Flexbereich 32 zu beeinflussen.

Das Montagewerkzeug 60 ist vorzugsweise aus einem Material hergestellt, das unter geringem Reibungswiderstand auf dem Trägerelement 8, dem Reinigungsfinger 6 und/oder dem Reinigungsfinger 2 und insbesondere dessen Innenseite entlang gleitet.

Vorzugsweise wird als Material ein PU- oder PE-Schaum und insbesondere das Herstellungsmaterial des Trägerfingers selbst verwendet, da dies die Produktionskosten senkt und zudem zu einem Element mit vergleichbaren und daher hinsichtlich der Anwendbarkeit vorteilhaften elastischen und statischen Eigenschaften führt. Natürlich ist es auch möglich, das Montagewerkzeug aus bereits verwendeten Trägerelementen zu fertigen und hierzu beispielsweise eine entsprechende Schneideschablone zur Verfügung zu stellen.

### Bezugszeichenliste

- 1: Reinigungselement
- 2: Reinigungsfinger
- 4: Kaschierung
- 6: Trägerfinger
- 8: Tragelement
- 10: Befestigungselement
- 11: Masseelement
- 12: Befestigungsgegenelement
- 14: Oberseite
- 16: Unterseite
- 18: Schlauchende bzw. Schlauchseite
- 20: Schlauchende bzw. Schlauchseite
- 22: Massebereich
- 24: Innenseite
- 26: Reinigungsstreifen
- 28: Seitenbereich
- 30: Naht
- 32: Flexbereich
- 34: freies Ende
- 36: Montageleiste
- 38: Montageelement
- 40: Montagegegenelement
- 42: Drehachse
- 44: Grundleiste
- 46: Seitenkante
- 47: Seitenkante
- 48: Stützfortsatz
- 50: L-Profil
- 51: Schenkel
- 52: Montagenut
- 53: Schenkel
- 54: Sollbruchstelle
- 56: Verbindungselement
- 60: Montagewerkzeug
- 62: Steckfortsatz
- 64: Markierung

## Patentansprüche

1. Reinigungs- oder dergleichen Polierelement für Autowaschanlagen, mit wenigstens einem Reinigungsfinger (2), der außenseitig wenigstens teilweise eine Kaschierung (4) oder dergleichen Schicht aus einem Reinigungs- oder Poliermaterial aufweist und der auf einen Trägerfinger (6) eines Trägerelementes (8) stülpbar und dort über wenigstens ein Befestigungselement (10) am Reinigungsfinger (2) mit einem Befestigungsgegenelement (12) am Trägerfinger (6) in lösbaren Arretierungseingriff bringbar ist,
**dadurch gekennzeichnet, dass**
der Reinigungsfinger (2) ein schlauchförmiges Flächenelement mit einer Oberseite (14), einer Unterseite (16) und zwei Schlauchenden (18; 20) ist, an denen schlauchinnenseitig Masseelemente (11) angeordnet sind, die als Befestigungselemente (10) ausgebildet sind, und
wobei der Reinigungsfinger (2) wahlweise von jedem Schlauchende (18; 20) aus auf den Trägerfinger (6) aufstülpbar ist.

2. Reinigungselement nach einem der vorhergehenden Ansprüche,
**dadurch gekennzeichnet, dass**
die außenseitig auf dem Reinigungsfinger (2) ausgebildete Kaschierung (4) im wesentlichen Gleichmäßig auf der Oberseite (18) und der Unterseite (20) ausgebildet ist.

3. Reinigungselement nach einem der vorhergehenden Ansprüche,
**dadurch gekennzeichnet,dass**
der als Schlauchelement ausgebildete Reinigungsfinger (2) wahlweise unter Vertauschen der Ober- und Unterseite (18; 20) auf den Trägerfinger (6) aufstülpbar ist.

4. Reinigungselement nach einem der vorhergehenden Ansprüche,
**dadurch gekennzeichnet, dass**
jeweils wenigstens ein Masseelement (11) schlauchinnenseitig auf der im aufgestülpten Zustand der Oberseite (14) und/oder der Unterseite (16) des Trägerfingers (6) zugewandeten Innenseite (24) des schlauchförmigen Reinigungsfingers (2) angeordnet ist.

5. Reinigungselement nach einem der vorhergehenden Ansprüche,
**dadurch gekennzeichnet, dass**
das Masseelement (11) ein Masseband ist und schlauchinnenseitig co-radial am Reinigungsfinger (2) angeordnet ist.

6. Reinigungselement nach einem der vorhergehenden Ansprüche,
**dadurch gekennzeichnet, dass**
der Reinigungsfinger (2) aus einem, insbesondere über eine in Längsrichtung in seinem Seitenbereich (28) verlaufende Naht (30) schlauchförmig verbundenem Textil oder dergleichen flexiblem Trägerstoff besteht.

7. Reinigungselement nach einem der vorhergehenden Ansprüche,
**dadurch gekennzeichnet, dass**
der Reinigungsfinger (2) an wenigstens einem Schlauchende (18; 20) Reinigungsstreifen (26) oder dergleichen Polierstreifen aufweist, die sich flexibel im Wesentlichen in Richtung der Längsachse des Reinigungsfingers (2) erstrecken.

8. Reinigungselement nach einem der vorhergehenden Ansprüche,
**dadurch gekennzeichnet, dass**
der Trägerfinger (6) bei aufgestülptem Reinigungsfinger (2) im wesentlichen 30 % bis 60 %, insbesondere 50%, unter Bildung eines Flexbereichs (32) zwischen freiem Ende (34) des Trägerfingers (6) und Massebereich (22) in den Reinigungsfinger (2) einragt.

9. Reinigungselement nach einem der vorhergehenden Ansprüche,
**dadurch gekennzeichnet, dass**
das Trägerelement (8) eine Montageleiste (36) aufweist, die über ein Montageelement (38) an einem Montagegegenelement (40) an einer Bürstenachse (42) oder dergleichen Vorrichtung anordbar ist, wobei sich die Montageleiste (36) mit einer Grundleiste (44) entlang einer Seitenkante (46) des Trägerelementes (8) erstreckt und wenigstens einen Stützfortsatz (48) umfasst, der sich im wesentlichen senkrecht dazu und parallel zur Ebene des Trägerelementes (8) erstreckt.

10. Reinigungselement nach einem der vorhergehenden Ansprüche, insbesondere Anspruch 9,
**dadurch gekennzeichnet, dass**
die Grundleiste (44) und der Stützfortsatz (48) ein L-Profil (50) bilden, das sich entlang wenigstens zwei Seitenkanten (46; 47) des Trägerelementes (8) erstreckt.

11. Reinigungselement nach einem der vorhergehenden Ansprüche, insbesondere nach einem der Ansprüche 9 oder 10,
**dadurch gekennzeichnet, dass**
die Montageleiste (36) und insbesondere das L-Profil (50) eine Montagenut (52) umfasst, in die das Trägerelement (8) mit wenigstens einer Seitenkante (46; 47) wenigstens teilweise einschiebbar und insbesondere darin befestigbar ist.

12. Reinigungselement nach einem der vorhergehenden Ansprüche, insbesondere nach einem der Ansprüche 9 bis 11,
**dadurch gekennzeichnet, dass**
die Grundleiste (44) und/oder der Stützfortsatz (48) Sollbruchstellen (54) oder dergleichen Einrichtungen aufweisen, mittels derer deren Länge schrittweise adaptierbar ist.

## Claims

1. A cleaning or similar polishing element for car washing installations, comprising at least one cleaning finger (2) which comprises a lamination (4) or a similar layer at least partly on the outside, which lamination is made of a cleaning or polishing material and which can be placed on a support finger (6) of a support element (8) and can be brought via at least one fixing element (10) on the cleaning finger (2) in a detachable locking engagement with a mating fixing element (12) on the cleaning finger (2), **characterized in that** the cleaning finger (2) is a tubular flat element with an upper side (14), a bottom side (16) and two tube ends (18; 20), on which weight elements (11) are arranged on the inside of the tube which are arranged as fixing elements (10), and with the cleaning finger (2) being optionally slippable from any end (18; 20) of the tube onto the support finger (6).

2. A cleaning element according to one of the preceding claims, **characterized in that** the lamination (4) provided on the outside on the cleaning finger (2) is arranged in a substantially even manner on the upper side (18) and the bottom side (20).

3. A cleaning element according to one of the preceding claims, **characterized in that** the cleaning finger (2) arranged as a tubular element can be slipped onto the support finger (6) by optionally exchanging the upper and bottom side (18; 20).

4. A cleaning element according to one of the preceding claims, **characterized in that** on the inside of the tube at least one weight element (11) is arranged on the inside (24) of the tubular cleaning finger (2) facing the upper side (14) and/or the bottom side (16) of the support finger (6) in the slipped-on state.

5. A cleaning element according to one of the preceding claims, **characterized in that** the weight element (11) is a weight band and is arranged on the inside of the tube on the cleaning finger (2) in a co-radial manner.

6. A cleaning element according to one of the preceding claims, **characterized in that** the cleaning finger (2) consists of a fabric or a similarly flexible carrier material which is connected in a tubular manner via a seam (30) extending in the longitudinal direction in its lateral region (28).

7. A cleaning element according to one of the preceding claims, **characterized in that** the cleaning finger (2) comprises cleaning strips (26) or similar polishing strips on at least one tube end (18; 20), which strips extend flexibly substantially in the direction of the longitudinal axis of the cleaning finger (2).

8. A cleaning element according to one of the preceding claims, **characterized in that** the carrier finger (6), when the cleaning finger (2) is slipped on, protrudes 30% to 60%, especially 50%, into the cleaning finger (2) between the free end (34) of the carrier finger (6) and the weight area (22) by forming a flexible zone (32).

9. A cleaning element according to one of the preceding claims, **characterized in that** the support element (8) comprises a mounting rail (36) which can be arranged via a mounting element (38) on a mating mounting element (40) on a brush shaft (42) or the like, with the mounting rail (36) extending with a base rail (44) along a side edge (46) of the support element (8) and comprising at least one support protrusion (48) which extends substantially parallel thereto and parallel to the plane of the support element (8).

10. A cleaning element according to one of the preceding claims, especially claim 9, **characterized in that** the base rail (44) and the support protrusion (48) form an L-section (50) which extends along at least two side edges (46; 47) of the support element (8).

11. A cleaning element according to one of the preceding claims, especially according to one of the claims 9 or 10, **characterized in that** the mounting rail (36), and especially the L-section (50), comprises a mounting groove (52), in which the support element (8) can be inserted at least partly with at least one side edge (46; 47) and can especially be fastened therein.

12. A cleaning element according to one of the preceding claims, especially according to one of the claims 9 to 11, **characterized in that** the base rail (44) and/or the support protrusion (48) comprise predetermined breaking points (54) or similar devices, by means of which their length can be adjusted in a step-by-step manner.

## Revendications

1. Élément de nettoyage ou élément de polissage similaire pour les installations de lavage de voitures, avec au mois une patte de nettoyage (2) qui présente au moins en partie sur l'extérieur une sérigraphie (4) ou une couche analogue d'un matériau de nettoyage ou de polissage et qui peut être enfilée par-dessus une patte de support (6) d'un élément de support (8) et mise en prise sur-celui-ci en vue de son blocage amovible par au moins un élément de fixation (10) sur la patte de nettoyage (2) avec un élément de fixation opposé (12) sur la patte de support (6), **caractérisé en ce que** la patte de nettoyage (2) est un élément plat tubulaire avec une face supérieure (14), une face inférieure (16) et deux extrémités de tube (18 ; 20), sur laquelle sont disposés sur l'intérieur du tube des éléments de lest (11) conformés comme des éléments de fixation (10), et dans lequel la patte de nettoyage (2) peut être enfilée au choix par l'une ou l'autre extrémité de tube (18 ; 20) sur la patte de support (6).

2. Élément de nettoyage selon l'une des revendications précédentes, **caractérisé en ce que** la sérigraphie (4) formée sur l'extérieur de la patte de nettoyage (2) est pour l'essentiel formée uniformément sur la face supérieure (18) et la face inférieure (20).

3. Élément de nettoyage selon l'une des revendications précédentes, **caractérisé en ce que** la patte de nettoyage (2) conformée comme un élément tubulaire peut être enfilée au choix sur la patte de support (6) en intervertissant les faces supérieure et inférieure (18 ; 20).

4. Élément de nettoyage selon l'une des revendications précédentes, **caractérisé en ce qu'**au moins un élément de lest (11) est disposé du côté du milieu du tube sur la face intérieure (24) de la patte de nettoyage (2) tubulaire orientée dans l'état enfilé vers la face supérieure (14) et/ou la face inférieure (16) de la patte de support (6).

5. Élément de nettoyage selon l'une des revendications précédentes, **caractérisé en ce que** l'élément de lest (11) est une bande de lest et est disposé sur l'intérieur du tube de façon coradiale sur la patte de nettoyage (2).

6. Élément de nettoyage selon l'une des revendications précédentes, **caractérisé en ce que** la patte de nettoyage (2) se compose d'un textile ou d'un matériau de support flexible similaire, en particulier assemblé en forme de tube par une couture (30) courant dans le sens longitudinal dans sa partie latérale (28).

7. Élément de nettoyage selon l'une des revendications précédentes, **caractérisé en ce que** la patte de nettoyage (2) présente à au moins une extrémité du tube (18 ; 20) des raclettes de nettoyage (26) ou des raclettes de polissage similaires, qui s'étendent de manière flexible sensiblement dans le sens de l'axe longitudinal de la patte de nettoyage (2).

8. Élément de nettoyage selon l'une des revendications précédentes, **caractérisé en ce que** la patte de support (6) pénètre dans la patte de nettoyage (2), quand la patte de nettoyage (2) est enfilée, sensiblement de 30 % à 60 %, en particulier de 50 %, en formant une zone flexible (32) entre l'extrémité libre (34) de la patte de support (6) et la partie lestée (22) dans la patte de nettoyage (2).

9. Élément de nettoyage selon l'une des revendications précédentes, **caractérisé en ce que** l'élément de support (8) présente une bande de montage (36) qui peut être disposée à l'aide d'un élément de montage (38) sur un élément de montage opposé (40) sur un axe de brosse (42) ou un dispositif similaire, la bande de montage (36) s'étendant par une bande de base (44) le long d'un bord latéral (46) de l'élément de support (8) et comprenant au moins une saillie d'appui (48) qui s'étend de façon sensiblement perpendiculaire à elle et parallèlement au plan de l'élément de support (8).

10. Élément de nettoyage selon l'une des revendications précédentes, en particulier la revendication 9, **caractérisé en ce que** la bande de base (44) et la saillie d'appui (48) forment un profil en L (50) qui s'étend le long d'au moins deux bords latéraux (46 ; 47) de l'élément de support (8).

11. Élément de nettoyage selon l'une des revendications précédentes, en particulier l'une des revendications 9 ou 10, **caractérisé en ce que** la bande de montage (36) et en particulier le profil en L (50) comporte une gorge de montage (52) dans laquelle l'élément de support (8) peut être enfilé au moins partiellement avec au moins un bord latéral (46 ; 47) et en particulier fixé dans celui-ci.

12. Élément de nettoyage selon l'une des revendications précédentes, en particulier l'une des revendications 9 ou 11, **caractérisé en ce que** la bande de base (44) et/ou la saillie d'appui (48) présentent des points de rupture définis (54) ou des dispositifs analogues au moyen desquels leur longueur peut être adaptée graduellement.
